# EUROPEAN PATENT APPLICATION

(11) **EP 1 662 716 A1**
(43) Date of publication of application: **31.05.2006**
(21) Application number: 04257417.8
(22) Date of filing: 30.11.2004
(51) Int. Cl.: H04L 12/56

(54) **System, node and method for bandwidth allocation in a communications network**

(71) Applicant: SIEMENS AKTIENGESELLSCHAFT, 80333 München (DE)
(72) Inventor: Edwin, Richard, Southampton SO15 4HU (GB); Fan, Changpeng, Dr., 10557 Berlin (DE); Reeve, Andrew, WinchesterSO22 5AH, Hants (GB)

(57) **Abstract**

The invention consists of a system and apparatus arranged to perform a method for setting up a call spanning at least two nodes in a communications network (100), which comprises the steps of:
- determining, upon receiving a request for setting up a call between said nodes, a bandwidth requirement of said request (3);
- verifying, upon determining said bandwidth requirement, if said request can be accommodated by an existing tunnel between said nodes with sufficient unused reserved bandwidth between said nodes (6);
- allocating, upon verifying that said request can not be accommodated at least one further tunnel between said nodes with a predefined bandwidth block (7); and
- setting up said call (8).

## Description

### Field of the invention

The invention is used in mobile or fixed communications networks to ensure that tunnels are optimally configured in order to achieve high efficiency and QoS performance.

### Summary of the invention

Increasingly, communications networks employ Multiprotocol Label Switching (MPLS) Traffic Engineering tunnels to transport packet data traffic in order to perform load balancing and route around congestion points and thus improve network efficiency and deliver high levels of Quality of Service (QoS). MPLS is a general technique for the fast transport of Internet Protocol (IP) packets, or other protocol data units, using labels assigned to the packets. Due to the fact that a variety of services with different QoS requirements can be supported in today's networks, Differentiated Services (DiffServ) aware Traffic Engineering is employed. Differentiated Services are composed of a number of functional elements implemented in network nodes, including a small set of per-hop forwarding behaviours, packet classification functions, and traffic conditioning functions including metering, marking, shaping, and policing. Separate tunnels for each class of service are set up, an aggregate of traffic requiring the same QoS treatment. Tunnels are set up between source and destination nodes in the communications network and an appropriate bandwidth must be reserved for each. The bandwidth depends on the traffic volume between particular source / destination nodes, as well as on the priority of the traffic being transported. For example real-time services may be given more bandwidth to ensure that they have the resources to maintain the QoS performance required. However, in modern communications networks traffic patterns are subject to considerable variation, especially when mobile populations are involved, due to the fact of their mobility, as members of such populations connect, disconnect, roam and use different types of services.

If when setting up and configuring a call through a communications network too much bandwidth is reserved for tunnels then bandwidth is wasted instead of being used for other calls, and if too little bandwidth is reserved then calls will not be able to maintain their required QoS performance.

Current techniques resolve the issue of QoS on the basis of known or predicted average traffic patterns, in order to reserve bandwidth for the different calls. However, this approach leads to suboptimal network performance, especially in the case of mobile traffic patterns as these patterns are difficult to predict and thus reserve the appropriate bandwidth. Furthermore, this is expensive in terms of operational expenditure as a lot of redundancy has to be built into the network in order to provide the necessary QoS performance.

A need therefore exists for a technique, that can set up and configure calls through a communications network in an optimal way in order to achieve a high QoS performance, provide for an efficient bandwidth allocation that is responsive to traffic variations, provides good scalability, and does not lead to an increase in operational expenditure.

With the present invention the above mentioned problems are resolved. The proposed technique is responsive to traffic variations and provides high QoS performance, efficient bandwidth allocation and does not increase the cost of operational expenditure. Furthermore, this technique sets up tunnels dynamically when required and deletes them when they are not in use in a simple and easily implemented way. Advantageously, the technique is well adapted to networks with varying traffic demands and network requirements and makes good use of network bandwidth.

Additionally, the proposed technique guarantees that when a request for a new call is generated and a call needs to be routed, a tunnel with free bandwidth is available, avoiding the need to increase the call set up time by including a tunnel setup time.

The technique is achieved by the teachings contained in the independent method, system and node claims.

Said independent method sets up a call spanning at least two nodes in a communications network, comprising the steps of:
- determining, upon receiving a request for setting up a call between said nodes, a bandwidth requirement of said request;
- verifying, upon determining said bandwidth requirement, if said request can be accommodated by an existing tunnel between said nodes with sufficient unused reserved bandwidth between said nodes;
- allocating, upon verifying that said request can not be accommodated at least one further tunnel between said nodes with a predefined bandwidth block; and
- setting up said call.

Said independent system comprises at least two nodes in a communications network, wherein each one of said at least two nodes comprises of a processing unit adapted to perform a method for setting up a call spanning said communications network between said at least two nodes, according to any of the claims 1 to 9 said processing unit comprising:
- receiving means adapted to receive a request for setting up a call between said at least two nodes on said communications network;
- determining means adapted upon said receiving means receiving a request for setting up said call on said communications network to determine a bandwidth requirement of said request;
- verifying means adapted upon said determining means determining said bandwidth requirement to verify if said request can be accommodated by an existing tunnel between said nodes;
- allocating means adapted upon said verifying means verifying that said request can not be accommodated to allocate at least one further tunnel between said nodes with a predefined bandwidth block; and
- setting up means adapted to set-up said call.

Said independent node of a communications network, comprises of a processing unit adapted to perform a method for setting up a call spanning said communications network to another node of said communications network, said processing unit comprising:
- receiving means adapted to receive a request for setting up a call on said communications network;
- determining means adapted upon said receiving means receiving a request for setting up said call on said communications network to determine a bandwidth requirement of said request;
- verifying means adapted upon said determining means determining said bandwidth requirement to verify if said request can be accommodated by an existing tunnel between said nodes;
- allocating means adapted upon said verifying means verifying that said request can not be accommodated to allocate at least one further tunnel between said nodes with a predefined bandwidth block; and
- setting up means adapted to set-up said call.

Further advantages can be seen in the dependent claims, whereby, allocating the predefined bandwidth block is performed by allocating a block of bandwidth which is a multiple integer of said predefined bandwidth block, thus simplifying the calculations of the process.

Additionally, when a call is terminated, removal of the allocated bandwidth is performed dependant on maintaining a minimum free bandwidth on the tunnel, therefore not wasting tunnel bandwidth and ensuring that tunnel efficiency is increased.

### Short description of the drawings

The present invention will become more fully understood from the detailed description given hereinbelow and the accompanying drawings which are given by way of illustration only, and thus are not limitative of the present invention, and wherein:
Fig. 1, shows a typical communications network, where tunnels are employed for allowing calls to be set up between user groups.
Fig. 2, shows a flow chart displaying the setting up of tunnels according to the prior art.
Fig. 3a and 3b show a flow chart displaying the setting up and removing of tunnels according to the invention.
Fig. 4, shows a communications network where the proposed invention is applied.
Fig. 5, shows in block diagram form the node according to the invention.

### Detailed description of the invention

In current tunnelling techniques, statically provisioned tunnels that fully connect the network entities are used. In a peer to peer case, there is a tunnel from every node supporting a population to every other such node. In a client-server case, there is a tunnel between every node supporting a population and every node supporting a server. When setting up and configuring tunnels, the source node will request to reserve a certain bandwidth depending on the volume of data that it wants to transmit, on the type of service that is being used and on the number of destinations nodes that it wants to transmit to as the source node may transmit to more that one node at a particular time. Tunnels are set up using Source Node Routing (SNR) and or centralised routing techniques that employ Open Shortest Path First (OSPF) or Constrained Shortest Path First (CSPF) routing algorithms which are well known in the art. However, if too much bandwidth is reserved for tunnels then bandwidth is wasted instead of being used for other calls and if too little bandwidth is reserved then calls will not be able to maintain their required QoS performance.

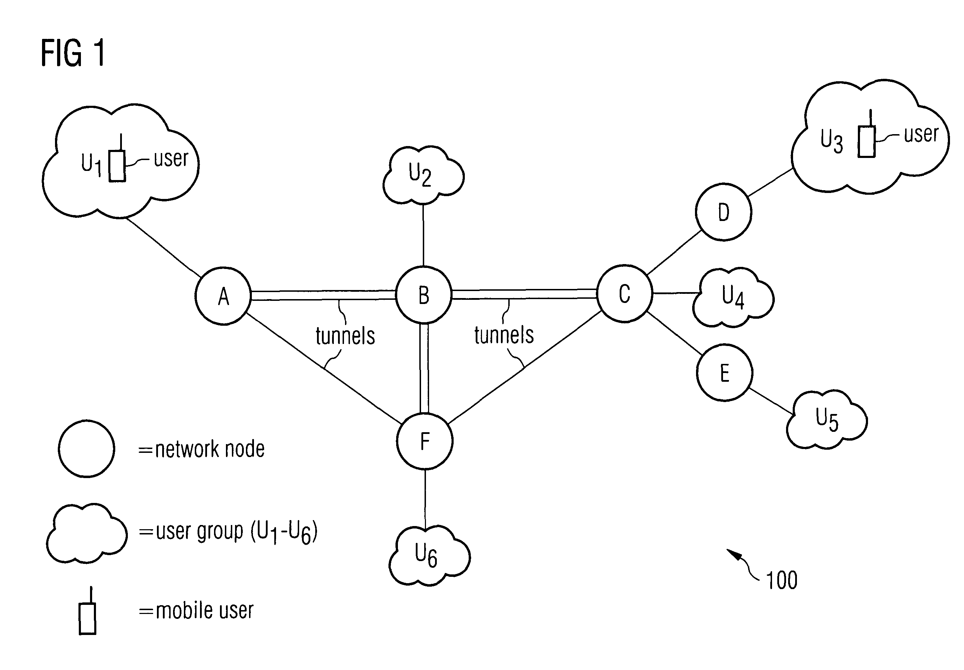

This can be seen in Fig. 1. The communications network 100, comprises of a number of network nodes A, B, C, D, E, F, each of which supports a number of user groups (Uᵢ, i = 1 to x) . Each user group in turn will contain a number of users. The users can be fixed users and or mobile users. In the case of mobile users these can be users in an UMTS (Universal Mobile Telecommunications System) environment.

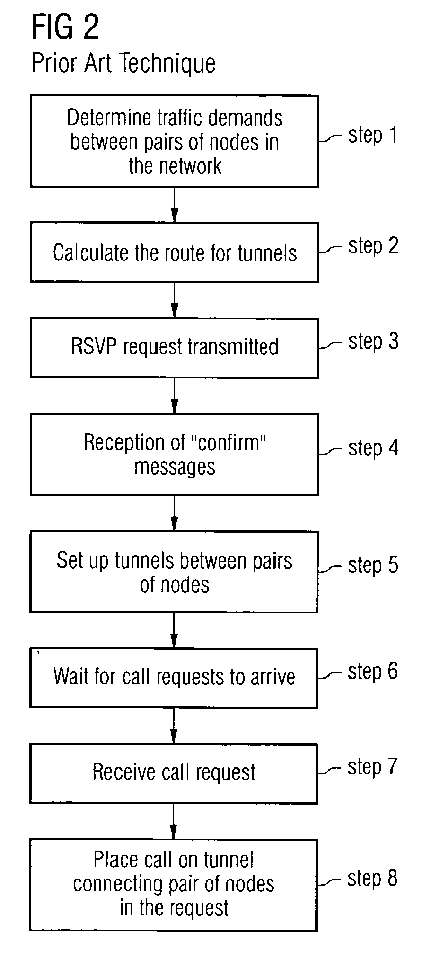

In the prior art as shown in Fig. 2, the traffic demands between each communicating pair of nodes is predicted and tunnels with the corresponding bandwidth reservations are set up accordingly between them. The source node will send Resource Reservation Protocol (RSVP) Path messages along the selected route that requests the necessary resources to be reserved by each node along the path. When each node along the path can reserve the requested resources, it will transmit a Reserve (RESV) message in the reverse direction back to source node. When the requested resources have been reserved from the source node to the destination node, the tunnel is set up and the transmission of data can begin. As calls arrive, they are placed on a tunnel connecting the call endpoint nodes. When a member of the user group U₁, as shown in Fig. 1, connected to node A attempts to set up a call to a member of user group U₃ connected to node D, node A will place the call on the appropriate tunnel connecting nodes A and D. In this example the path of the calculated route for the tunnel will be (A-B-C-D) through nodes B and C, and it is assumed that a tunnel exists and spans the network from node A to node D, and that no per call routing is required.

The resources reserved correspond to the required bandwidth requested by the user for the duration of the call, and depends on the volume of traffic that is to be transmitted, the QoS requested, the type of call i.e. real time or non-real time. However during the passage of time as calls come and go there can be instances where the volume of traffic varies above or below the volume of traffic that was originally planned for, as when there is a sudden increase in the amount of traffic being transmitted. In the case where the traffic volume increases there will be inadequate QoS available, and in the case where the traffic volume decreases there will be a waste of reserved bandwidth. This will cause a suboptimal network performance to occur. Additionally, as tunnels are set up and configured in a semi-permanent manner, the network does not have the necessary flexibility to react to traffic changes when traffic volume varies and when requests for new calls to be set up are generated.

In order to overcome these drawbacks, a new inventive method, is proposed. The method provides for a number of steps that optimise the tunnels configured for the route.

### In this method two parameters are defined:

The "quantum", which corresponds to a predefined bandwidth block Q for a tunnel. The bandwidth of tunnels can vary from one to the other but their individual bandwidths will always be proportional to the quantum.

The "threshold", which corresponds to a predefined amount of minimum free bandwidth T that is required to exist on a tunnel.

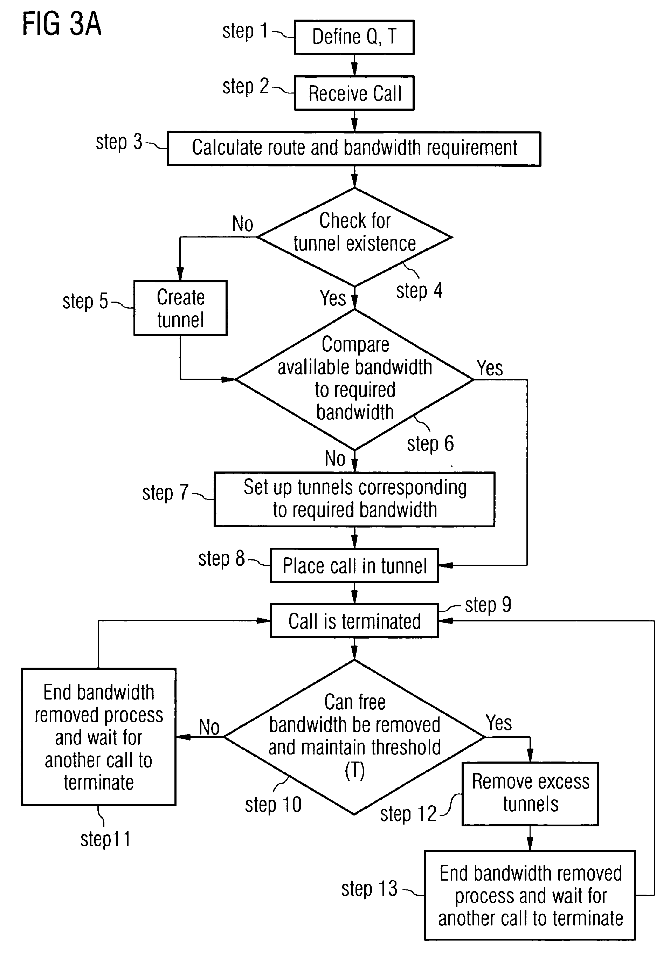

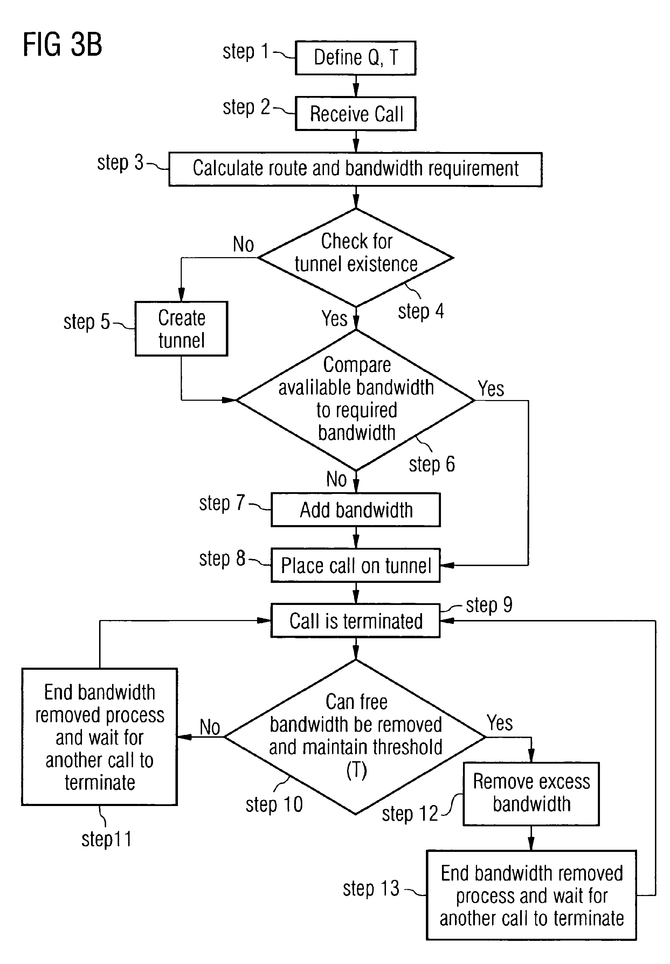

These parameters are defined at the beginning of the network operation (step 1) (Fig. 3a and 3b).

Once, a request for a tunnel to be set up has been generated, the source node A calculates the route to the destination route D. In communications networks that run MPLS, at this stage in the set up process, the source node A will transmit a RSVP Path message, in order for the required resources to be reserved and a new tunnel being set up, as show in Fig. 2. However in doing this, existing tunnels are not taken into account when setting up the call.

Fig. 3a shows how the proposed method functions in the case of a tunnel operation mode comprising multiple tunnels each with the same predefined bandwidth (quantum) Q between the source and destination node. The free bandwidth between the source and the destination is calculated by summing up the free bandwidths of all the tunnels between them. Fig. 3b shows how the proposed method functions in the case when one tunnel exists between the source and destination node and the bandwidth is a multiple of the predefined bandwidth (quantum) Q.

In order to enable a more efficient management of network resources within a communications network, the quantised multi tunnel approach is applied consistently throughout the communications network. As an option, before setting up a new tunnel, an attempt can be made to increase the bandwidth of an existing tunnel by the required amount.

In the proposed technique, as shown in Fig. 3a upon receiving a request for setting up a call (step 2), the destination and a bandwidth requirement will be determined (step 3). A check will then be performed (step 4) to ascertain whether a tunnel already exists between the source and the destination node. If there is no tunnel, a tunnel will be created between the two nodes (step 5). Once a tunnel has been created or a tunnel exists already the available bandwidth on the tunnel is compared to the required bandwidth of the call (step 6). If the bandwidth available is sufficient for the call, then the call is placed onto the tunnel (step 8). If there is not sufficient bandwidth available, then a tunnel with sufficient bandwidth is set up (step 7). Then the call is placed onto the tunnel (step 8).

Upon a call being terminated (step 9), the connection is terminated and then the process will check to see whether it can remove the free bandwidth that is now available and still maintain the predefined amount of free bandwidth (threshold) T from step 1 (step 10). If the threshold requirements can not be met, then no removal is effected and the process waits until another call is terminated to perform the check again (step 11). If the threshold requirements can be met, then a removal of the bandwidth is effected (step 12). The threshold provides a means of deciding how much bandwidth to keep in reserve. Once the removal has been effected the process terminates (step 13) and waits until another call is terminated.

In order to further explain the process, an illustrative example of the process in this operation mode follows.

For reasons of simplicity, we assume that the each tunnel has a defined bandwidth (quantum) Q equal to 10kb/s and a defined free minimum bandwidth (threshold) T equal to 3kb/s, and that each call requires a bandwidth of 1kb/s. These values being in no way limitations of the present invention. For the first call, a new tunnel t1 will be set up and the free tunnel bandwidth will then be equal to 9kb/s. For the following 6 calls no new tunnel will be setup as these calls can be accommodated by the existing free bandwidth on t1. On the 8^{th} call, free bandwidth drops below T and so a new tunnel is set up. Assuming now that 27 requests for call setup arrive in total, this means that 27kb/s of bandwidth is required to accommodate them. Therefore a second tunnel t2 and a third tunnel t3 will be setup. The aggregate bandwidth of the three tunnels is 30kb/s thus all the calls can be accommodated. Once the new tunnels have been set up, tunnel t1 will hold 10 calls, tunnel t2 will hold 10 calls and tunnel t3 will hold 7 calls. At some point in time some calls are terminated in such a way that tunnel t1 and tunnel t2 have each 9 calls and tunnel t3 is free of all calls. Tunnel t3 can not be deleted because in doing so the remaining free bandwidth will be 2kb/s in total (1kb/s on t1 and 1kb/s on t2), which is less than the predefined bandwidth (threshold) T. If at a further point in time, more calls are terminated so that tunnel t1 and tunnel t3 have each 7 calls and tunnel t2 is free of all calls, then tunnel t2 can be deleted because the free bandwidth between the source and the destination will then be 6kb/s (3kb/s on t1 and 3kb/s on t2), which is larger than the value of T.

Additionally, when there are more than one tunnels between two nodes, the route for each tunnel may be independently calculated so that they may follow different routes providing the additional benefit of performing a type of load balancing across the communications network. This increases the chance of being able to find sufficient tunnel bandwidth between a pair of nodes, in order to accommodate a call request.

In the proposed technique, as shown in Fig. 3b upon receiving a request for setting up a call (step 2), the destination node and a bandwidth requirement will be determined (step 3). A check will be performed (step 4) to ascertain whether a tunnel already exists between the source and the destination node. If there is no tunnel, a tunnel will be created between the two nodes (step 5). This tunnel will have a bandwidth Q. Once the tunnel has been set up or a tunnel already exists the available bandwidth on the tunnel is compared to the required bandwidth of the call (step 6). If the bandwidth available is sufficient for the call, then the call is placed onto the tunnel (step 8). If there is not sufficient bandwidth available, then an amount of bandwidth that is enough to allow the call to proceed is added (step 7). This allows for signalling bandwidth increase requests across the network to be bypassed. Then the call is placed onto the tunnel (step 8).

Upon a call being terminated (step 9), the connection is terminated and then the process will check to see whether it can remove the free bandwidth that is now available and still maintain the predefined amount of free bandwidth (threshold) T from step 1 (step 10). If the threshold requirements can not be met, then no removal is effected and the process waits until another call is terminated to perform the check again (step 11). If the threshold requirements can be met, then a removal of the bandwidth is effected (step 12) in one go. Once the removal has been effected the process terminates (step 13) and waits until another call is terminated.

When the tunnels are in operation, in the case of the free tunnel bandwidth available to a destination falls below the threshold value T a new tunnel will be set up. In the case of a tunnel becoming free of calls, the tunnel is deleted only if the deletion of the tunnel does not reduce the available bandwidth to the destination below the threshold value T. In the case that the free tunnel bandwidth exceeds the quantum Q, the tunnel bandwidth can be reduced as long as the reduction does not reduce the value below the threshold T.

Thus, high QoS performance is achieved as calls are guaranteed the bandwidth they require. Calls are guaranteed the existence of a tunnel thus reducing the call setup time. Efficient bandwidth allocation is achieved as the technique can adapt to traffic variations. Network efficiency is achieved through the optimisation of network performance as tunnels are set up dynamically when required and removed when not in use, thus avoiding wasting resources and does not increase the cost of operational expenditure as it is simple to implement.

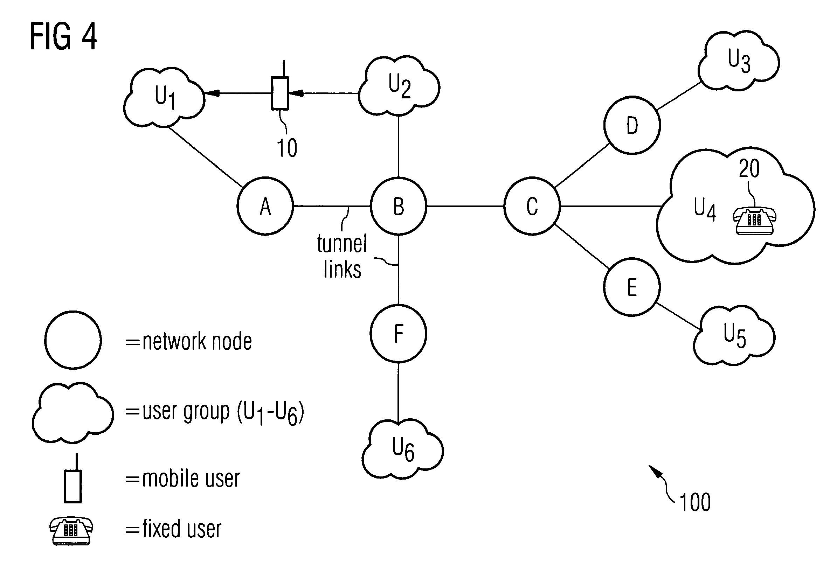

In Fig. 4, a further example of the proposed inventive technique can be seen. A communications network 100, comprises of a number of network nodes A, B, C, D, E, F that run known routing protocols such as MPLS, OSPF, CSPF, SNR, each of which supports a population of users (U₁, to U₆). The users can be fixed and or mobile users in an UMTS environment. In this example a tunnel already exists between network nodes A, B, C creating a tunnel A-B-C, which connects user group 1 U₁ to user group 4 U₄. Furthermore network node A has defined the "quantum" Q and "threshold" T values for the tunnel A-B-C. A mobile user 10, moves from user group 2 (U₂) to user group 1 (U₁), and requests for a call to be set up to a user 20 in user group 4 (U₄) that is supported by node C.

Node A, being the source node for this call will receive the request. Each node, in this case node A, has a table with an entry for each node to which it has tunnels. Each entry consists of a list of tunnels to that node. Node A simply selects the entry corresponding to the call's destination node and finds a tunnel on the list with sufficient bandwidth for the call. The choice of tunnel is based purely on the destination, and no per call routing is required. In the example, such a tunnel already exists (A-B-C), so it is not necessary to request a new tunnel set up. If such a tunnel does not exist then the normal process for setting up a call will be followed. The existing tunnel bandwidth is modified by node A, in order to accommodate the requirements of the requested call, before it places the call between users 10 and 20, thus avoiding having to increase the call set up time.

During tunnel operation a sub process is active within the source node A. This sub process monitors the bandwidth of the tunnel and is used to maintain efficiency and scalability in the network in view of traffic changes.

In the case when the amount of free bandwidth in a tunnel exceeds the value of the quantum Q, the tunnel bandwidth will be reduced by the sub process, as long as this reduction does not cause a reduction in the threshold value T. This ensures that tunnel bandwidth is not wasted and tunnel efficiency is increased.

In the case when calls terminate and the tunnel becomes free of calls, the tunnel will be deleted by the sub process, as long as the available bandwidth to the destination does not fall below the threshold value T. This ensures that tunnel bandwidth is not wasted, that tunnels are not inefficiently placed in the network, thus improving scalability.

In the case of the free tunnel bandwidth available to a destination falls below the threshold value T, a new tunnel will be set up by the sub process. This ensures that a tunnel with a certain amount of available bandwidth will exist at all times, thus maintaining a minimum QoS.

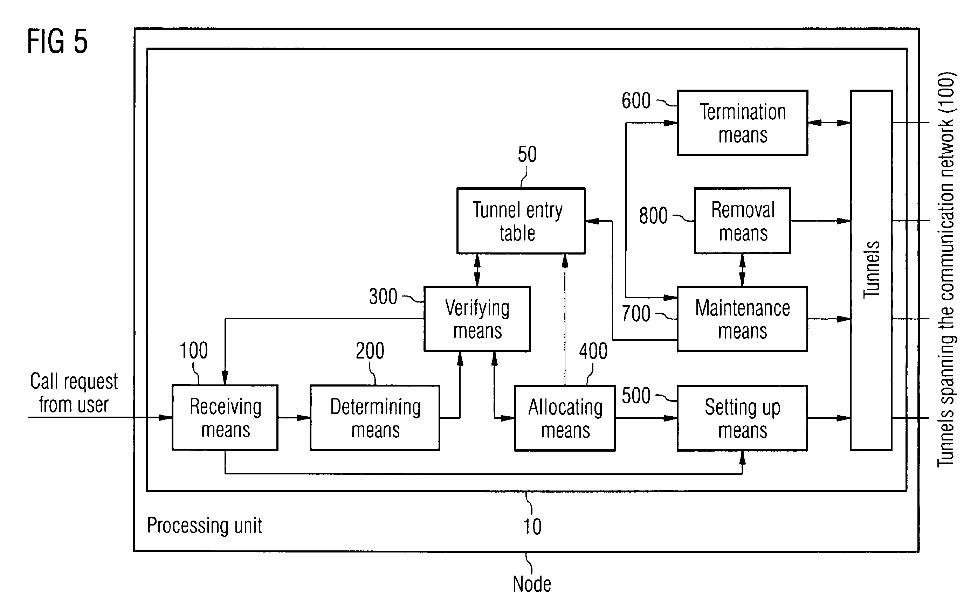

In Fig. 5, a node according to the invention is shown in block form.

The node comprises a processing unit (10) which in turn comprises of a tunnel entry table (50) which contains an entry for each node to which the node has tunnels to. The entry contains information concerning the tunnel such as bandwidth, type of traffic, etc. The node further comprises of a receiving means (100) adapted to receive a request fro setting up a call spanning the communications network (100) from one user to another user. The receiving means (100) are connected to a determining means (200), which in turn determines the bandwidth requirement of the received call request. Once the bandwidth requirement has been determined, verifying means (300) will verify by accessing the tunnel entry table (50) whether an existing tunnel exists which can accommodate the call bandwidth requirement. If such a tunnel exists then the verification means will notify the receiving means as to which tunnel to use. If no such tunnel exists, the verification means will notify allocating means (400) to allocate at least one further tunnel having a predefined bandwidth (Q) between the two nodes. In turn setting up means (500) will set up the tunnel. The node further comprises of termination means (600) that upon receiving an acknowledgement that the call is terminated will terminate the call. Additionally maintenance means (700) and removal means (800) are arranged to maintain a minimum free bandwidth (T) on the tunnel and to remove bandwidth from the tunnel without compromising the minimum free bandwidth requirement. The maintenance means will in turn update the tunnel entry table. The termination means (600), the maintenance means (700) and the removal means (800) are arranged to form together the sub process that monitors the tunnel bandwidth, in order to maintain network efficiency and scalability in view of traffic changes.

Although the invention has been described in terms of preferred embodiment described herein, those skilled in the art will appreciate other embodiments and modifications which can be made without departing from the scope of the teachings of the invention. All such modifications are intended to be included within the scope of the claims appended hereto.

## Claims

1. A method for setting up a call spanning at least two nodes in a communications network (100), comprising the steps of:
- determining, upon receiving a request for setting up a call between said nodes, a bandwidth requirement of said request;
- verifying, upon determining said bandwidth requirement, if said request can be accommodated by an existing tunnel between said nodes with sufficient unused reserved bandwidth between said nodes;
- allocating, upon verifying that said request can not be accommodated at least one further tunnel between said nodes with a predefined bandwidth block (Q); and
- setting up said call.

2. A method according to claim 1, whereby allocating said further tunnel with said predefined bandwidth block (Q), is performed by allocating a block of bandwidth being a multiple integer of said predefined bandwidth block (Q) equal to an amount of bandwidth necessary to fulfil said bandwidth requirement.

3. A method according to one of the preceding claims, whereby upon termination of said call, a removal of said at least one allocated further predefined bandwidth block (Q) is performed dependant on maintaining a minimum free bandwidth (T) on said tunnel after said removal.

4. A node (A) of a communications network (100), comprising of a processing unit (10) adapted to perform a method for setting up a call spanning said communications network (100) to another node of said communications network (100), said processing unit (10) comprising:
- receiving means (100) adapted to receive a request for setting up a call on said communications network (100);
- determining means (200) adapted upon said receiving means (100) receiving a request for setting up said call on said communications network (100) to determine a bandwidth requirement of said request;
- verifying means (300) adapted upon said determining means (200) determining said bandwidth requirement to verify if said request can be accommodated by an existing tunnel between said nodes (A, C);
- allocating means (400) adapted upon said verifying means (300) verifying that said request can not be accommodated to allocate at least one further tunnel between said nodes (A, C) with a predefined bandwidth block (Q); and
- setting up means (500) adapted to set-up said call.

5. A node according to claim 4, wherein said processing unit further comprises:
- termination means (600) adapted to terminate said call;
- maintenance means (700) adapted to maintain a minimum free bandwidth (T) on said tunnel; and
- removal means (800) adapted in response to said maintenance means (700) maintaining said minimum free bandwidth (T) to remove said at least one allocated further tunnel of predefined bandwidth block (Q).

6. A system comprising at least two nodes (A, C) in a communications network (100), wherein each one of said at least two nodes comprises of a processing unit adapted to perform a method for setting up a call spanning said at least two nodes in said communications network (100), according to any of the claims 1 to 3 said processing unit comprising:
- receiving means (100) adapted to receive a request for setting up a call between said at least two nodes (A, C) on said communications network (100);
- determining means (200) adapted upon said receiving means (100) receiving a request for setting up said call on said communications network (100) to determine a bandwidth requirement of said request;
- verifying means (300) adapted upon said determining means (200) determining said bandwidth requirement to verify if said request can be accommodated by an existing tunnel between said nodes;
- allocating means (400) adapted upon said verifying means (300) verifying that said request can not be accommodated to allocate at least one further tunnel between said nodes with a predefined bandwidth block (Q); and
- setting up means (500) adapted to set-up said call.

7. A system according to claim 6, wherein said processing unit further comprises:
- termination means (600) adapted to terminate said call;
- maintenance means (700) adapted to maintain a minimum free bandwidth (T) on said tunnel; and
- removal means (800) adapted in response to said maintenance means (700) maintaining said minimum free bandwidth (T) to remove said at least one allocated further tunnel of predefined bandwidth block (Q).
